# EUROPEAN PATENT APPLICATION

(11) **EP 2 518 615 A1**
(43) Date of publication of application: **31.10.2012**
(21) Application number: 10842922.6
(22) Date of filing: 23.11.2010
(51) Int. Cl.: G06F 3/12

(54) **METHOD FOR THE SHARED PRINTING OF PRINT JOBS**

(30) Priority: 24.12.2009 ES 200931273
(71) Applicant: Eurograficas Pichel, S.L., 15840 Santa Comba (A Coruña) (ES)
(72) Inventor: PICHEL LOPEZ, Juan Carlos, E-15890 Santiago de Compostela (A Coruña) (ES); PICHEL LOPEZ, Eugenio, E-15890 Santiago de Compostela (A Coruña) (ES)
(74) Representative: Temino Ceniceros, Ignacio
(86) International application number: PCT/ES2010/070767
(87) International publication number: WO 2011/086206

(57) **Abstract**

Method for the shared printing of print jobs, which via a Web application allows for at least one supplier of printing services to provide a client, at least one portion of a standard printing sheet, in such a manner that on this single sheet, one or more users may use one or more printing portions of this single standard printing sheet, which includes a sheet selection stage (21) and where if a free portion (22) exists, the job is inserted in this free portion (23) or a new sheet is selected (24), and where a sheet is printed (25) once it has reached the maximum printing due date or when it has been completed; while a new sheet (24) is left open waiting for other users to occupy (26) the free portions or if the due date is reached, it is printed (27).

## Description

The purpose of this invention is to devise a method that allows compartmenting printing work by making the proper tools available to different users so that the largest number of users as possible may associate with each other, completing and merging their work into the different printing jobs that have been requested by other users, which are of similar characteristics; or if nothing of similar characteristics is active, create a new printing job in a determined space, leaving the rest of the space available so that other users can occupy it, taking maximum advantage of the work capacity and of printing.

### PRIOR STATE OF THE ART

Currently, the methods available for requesting and printing jobs follow traditional procedure, where the customer contacts one or several suppliers requesting a cost estimate as well as information relative to the quality, completion dates, etc.; and after negotiating these, the order is placed.

Recently, with the onset of Internet type communication networks, other methods have also become available for purchasing printing services such as the ones listed below:
1. - A supplier places several jobs that he can carry out on the network and offers a cost depending on the amount, paper, inks, etc.
2. - Using a laptop, consumers state their needs and suppliers make an offer or bid on these jobs.

A general technical problem associated with these methods and systems is the cost required for paper printing small jobs on machines that are getting bigger every day, resulting in higher material costs, which are transferred to the customer, as well as causing serious damage to the environment due to the excess raw material and chemical products that are used in the process. Therefore, the technical problem described in this invention and which this patent intends to solve is the optimizing of the consumption of raw materials and chemical products used in printing, in a manner that generates a profit and does not harm the environment.

### DESCRIPTION OF THE INVENTION

To solve the aforementioned technical problem, the shared printing job method is applied, which via a Web application, at least one printing services supplier make available to one or more customers, at least one portion of a standard printing sheet in such a manner that in a single sheet, one or more users may have one or more printing portions available to them in said standard printing sheet.

This way, any user can put into production a new standard printing sheet, which adjusts the required printing characteristics in part of said sheet, extending the rest for other users and therefore, a single sheet needs to be printed which, subsequently, will be divided as per the indicated proportions, instead of how it is currently carried out, by printing as many sheets as the number of jobs and wasting the unused space, which is normally discarded.

More specifically, the method described by the invention in a particular embodiment includes a sheet selection stage where, if a free portion is available, the job is inserted in said portion or a new sheet is selected; and where a sheet is printed once the maximum printing date has been reached or when it has been completed; while a new sheet is left open, waiting for other users to occupy the free portions or, if the limit date is reached, it is printed.

In a particular embodiment, the Web application includes a first standard sheet selection zone placed into production and organized in a list showing its basic characteristics; and where accessing one of the sheets of the first zone, the data is shown in a second portion selection zone and a printing job additional information zone, and this information will be enabled or disabled according to the previously selected job.

Throughout the description and claims, the word "encompasses" and its synonyms do not intend to exclude other technical characteristics, additions, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred embodiments indicated herein.

### BRIEF DESCRIPTION OF THE DRAWINGS

- FIG1.: Shows a schematic view of the Web application implemented by the method described in this invention.

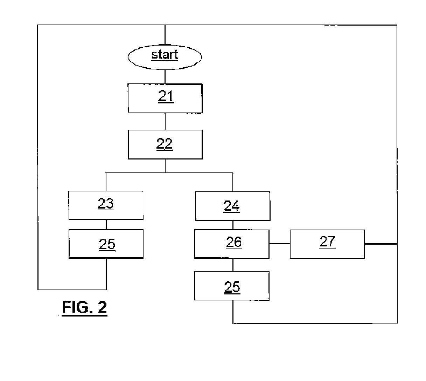

- FIG2.: Shows a flow diagram, which describes the method described in this invention.

### DETAILED DESCRIPTION OF THE APPLICATION METHODS

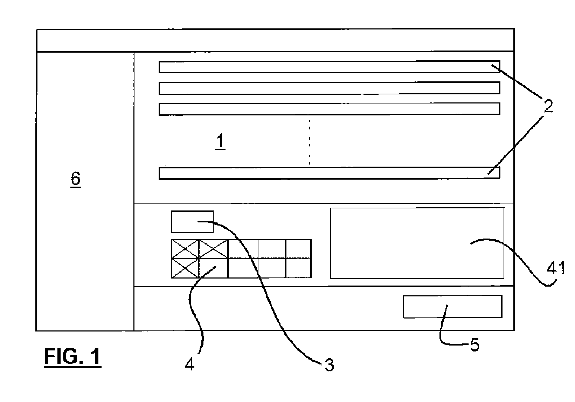

The method for shared printing of work consists essentially of a method that allows several requesters of printing products to use the same standard sheet to jointly carry out jobs that are the same or have similar characteristics; all of this implemented in a Web application (FIG. 1), to which a plurality of users have access, and where a first zone (1) appears for selecting standard sheets placed into production and organized in a list (2) showing its basic characteristics, such as the work number or code, free printing portions, paper type, weight in grams, number of copies and delivery date.

Accessing one of the jobs of the first selection zone (1), a series of detailed essential characteristics appear in the list (2) within a second selection of portions zone (4), where the basic data reappear again in an area designated for this purpose (3) and in an additional details definition zone (41) of the printing work; these details will be enabled or disabled depending on the previously selected work. In any case, and in a logical manner, if the sheet is new, all the characteristics will be enabled.

The portions selection zone (4) is, essentially, and as an example, a box divided into several sub-blocks or pieces, of which a part will already be occupied (marked with an X and not selectable) and others appear empty, and may be selected by the user as well as other additional data, (41) which the user can adjust. All of this is also included in the price (5). Finally, an additional selection zone (6) with other data required for carrying out the operation is available.

More specifically, the shared printing job method is characterized because it includes a sheet selection stage (21) where, if a free portion is available (22), the job is inserted in said free portion (23) or a new sheet is selected (24), and where a sheet is printed (25) once the maximum printing date has been reached or when it has been completed; finally, a new sheet (26) is left open, waiting for other users to occupy (26) the free portions or if the limit date is reached, print it (27) even though some portions are free.

## Claims

1. Method for the shared printing of print jobs, which via a Web application allows for at least one supplier of printing services to provide one or more clients, at least one portion of a standard printing sheet, in such a manner that on this single sheet, one or more users may use one or more printing portions of this single standard printing sheet **characterized in that** it includes a sheet selection stage (21) and if a free portion (22) exists, the job is inserted in this free portion (23) or a new sheet is selected (24), and where a sheet is printed (25) once it has reached the maximum printing due date or when it has been completed; while a new sheet (24) is left open waiting for other users to occupy (26) the free portions or if the due date is reached, print it (27).

2. Method in accordance with claim 1 **characterized in that** the Web application includes a first standard sheet selection zone (1) placed into production and organized in a list (2) showing its basic characteristics; and where accessing one of the sheets of the first zone (1), the data is reflected in a second portion selection zone (4) and a printing job additional information zone (41), enabling or disabling this information according to the previously selected job.
